Europäisches Patentamt

European Patent Office

Office européen des brevets

(11) Veröffentlichungsnummer: **0 018 323**
A2

## (12) EUROPÄISCHE PATENTANMELDUNG

(21) Anmeldenummer: **80810115.8**

(22) Anmeldetag: **02.04.80**

(51) Int. Cl.³: **H 01 M 2/20,** H 01 M 10/46, H 02 G 7/02

(30) Priorität: **17.04.79 CH 3585/79**

(43) Veröffentlichungstag der Anmeldung: **29.10.80**
Patentblatt 80/22

(84) Benannte Vertragsstaaten: **AT BE CH DE FR IT LI NL SE**

(71) Anmelder: **Autophon A.G., Ziegelmattstrasse 1-15, CH-4500 Solothurn 3 (CH)**

(72) Erfinder: **Ingold, Pius, Luzernstrasse 13, CH-4553 Subingen (Solothurn) (CH)**

(74) Vertreter: **Bovard, Fritz Albert et al, Bovard & Cie. Patentanwälte VSP-Rechtsanwälte Optingenstrasse 16, CH-3000 Bern 25 (CH)**

(54) **Aufladbare Batterie und Ladegerät mit einem köcherförmigen Teil.**

(57) Aufladbare Batterie, welche in ein dazu passendes Ladegerät einsteckbar ist, wobei die Verbindung zwischen Batterie und Ladegerät durch starre an Seitenwänden (1, 2) der Batterie angebrachte Vorsprünge (4, 6) und entsprechende, an Innenflächen des Ladegeräts angebrachte Federn hergestellt wird. Im Ladegerät sind dabei doppelt so viele Federn angeordnet wie Vorsprünge an der Batterie vorhanden sind, wobei die gegenseitigen Anordnungen derart getroffen sind, daß die Batterie in zwei um eine halbe Drehung voneinander abweichenden Lagen in das Ladegerät eingeführt und aufgeladen werden kann.

- 1 -

## Aufladbare Batterie und Ladegerät mit einem köcherförmigen Teil

Die vorliegende Erfindung betrifft eine aufladbare Batterie mit einem quaderförmigen Gehäuse, das vier Längs-Aussenflächen und eine Längs-Symmetrieachse aufweist. Die Erfindung betrifft ausserdem ein Ladegerät mit einem köcherförmigen Teil, welcher vier Längs-Innenflächen und eine Längs-Symmetrieachse aufweist, wobei die Anordnung der vier Innenflächen derjenigen der vier Aussenflächen der Batterie entspricht und es ermöglicht, dass die Batterie zwecks Aufladung in einer Weise in den köcherförmigen Teil einführbar ist, in welcher die beiden Symmetrieachsen zusammenfallen. Bei einer solchen Einführung der Batterie in das Ladegerät werden am Gehäuse der Batterie angebrachte erste Kontakte mit im Innern des genannten köcherförmigen Teils angebrachten zweiten Kontakten in Verbindung gebracht.

Solche Batterien werden in erster Linie für die Speisung von tragbaren Funkgeräten verwendet, wobei sie je einen Teil eines Funkgerätes bilden und mit dem übrigen Teil vereinigt werden können. Zwecks Aufladung wird die Batterie allein oder zusammen mit dem damit verbundenen Funkgerät in das Ladegerät eingeschoben. In allen Fällen muss auf irgend eine Weise verhindert sein, dass die Batterien verkehrt an das Ladegerät angeschlossen werden, was durch unsymmetrische Anordnung der Kontakte oder durch Nuten und Vorsprünge an der Batterie und am Ladegerät erreicht werden kann.

- 2 -

Es ist naheliegend, die ersten Kontakte als Steckbuchsen und die zweiten als Stecker auszubilden. Dabei besteht jedoch die Gefahr, dass die Buchsen durch Fremdkörper verstopft werden.

Mit der vorliegenden Erfindung wird nun die Aufgabe gelöst, eine Batterie und ein dazu passendes Ladegerät zu schaffen, an welchen keine Buchsen vorhanden sind und bei denen die Batterie in zwei verschiedenen Lagen in das Ladegerät eingesetzt werden kann, so dass nicht auf eine bestimmte Lage geachtet werden muss.

Die Erfindung betrifft eine Batterie und ein Ladegerät der vorstehend beschriebenen Art, deren erstes Kennzeichen darin besteht, dass die ersten Kontakte an mindestens einer Längsfläche der Batterie angeordnete starre Vorsprünge sind. Ein weiteres Kennzeichen der Erfindung besteht darin, dass die zweiten Kontakte an Längs-Innenflächen des Ladegerätes angebrachte Federn sind, die in einer senkrecht zu den genannten Flächen verlaufenden Richtung beweglich sind. Ein weiteres Kennzeichen besteht darin, dass die ersten Kontakte in einer Weise angeordnet sind, gemäss welcher eine durch zwei beliebige erste Kontakte verlaufende Gerade neben der Längs-Symmetrieachse vorbei verläuft. Ein letztes Kennzeichen der Erfindung besteht darin, dass jedem ersten Kontakt zwei zum Zusammenwirken mit diesem Kontakt bestimmte, untereinander verbundene zweite Kontakte zugeordnet sind. Diese zweiten Kontakte sind dabei in einer Weise an einander gegenüberliegenden Innenflächen des Ladegerätes angeordnet, gemäss welcher eine durch die beiden Kontakte verlaufende Gerade auch durch die Symmetrieachse verläuft. Infolgedessen berührt bei in das Ladegerät eingesetzter Batterie jeder erste Kontakt, unabhängig von der Lage der Batterie innerhalb des Ladegerätes, immer einen von zwei untereinander verbundenen zweiten Kontakten.

In einer besondern Ausführungsform der Erfindung sind die beiden ersten Kontakte, die der Zufuhr des Ladestroms dienen, an einander gegenüberliegenden Flächen der Batterie angebracht, so dass ein unbeabsichtigter Kurzschluss zwischen diesen beiden Kontakten praktisch ausgeschlossen ist.

Die Erfindung wird nun anhand eines Ausführungsbeispiels erklärt.

Die Figur 1 zeigt die Seitenansicht einer Batterie.

Die Figur 2 zeigt einen Längsschnitt durch den köcherähnlichen Teil eines Ladegerätes.

Die Figur 3 zeigt die Draufsicht auf die in Figur 1 dargestellte Batterie.

Die Figur 4 zeigt die Draufsicht auf das in Figur 2 dargestellte Gerät.

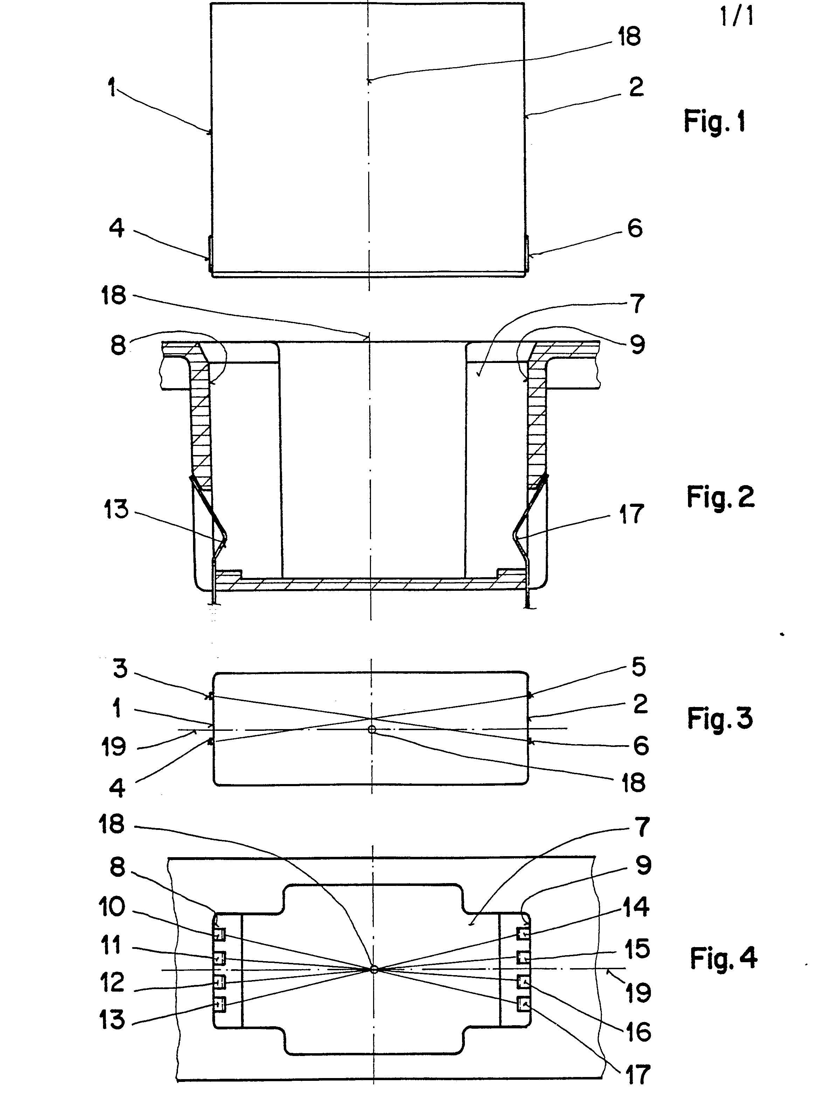

Die in den Figuren 1 und 3 dargestellte Batterie ist quaderförmig und weist vier Längs-Aussenflächen auf, von denen an den Flächen 1 und 2 erste Kontakte 3...6 angebracht sind. Das Gehäuse der Batterie ist aus isolierendem Kunststoff hergestellt, und die ersten Kontakte sind darin eingebettet und stehen nur wenig über die Flächen 1 und 2 vor. Die köcherähnliche Oeffnung 7 weist vier Längs-Innenflächen auf, wobei an zwei dieser Flächen, die einander gegenüberliegen und mit 8 und 9 bezeichnet sind, als Federn ausgebildete zweite Kontakte 10...17 angebracht sind.

Die Batterie weist, wie es in der Natur der Quader liegt, eine Längsachse 18 und eine senkrecht zu den Aussenflächen 1 und 2 verlaufende Symmetrieebene 19 auf. Die Kontakte 3 und 5 sind Kontakte, über welche der Batterie der Ladestrom zugeführt wird, und zwar wird der Kontakt 3 als Pluspol,
der Kontakt 5 als Minuspol angenommen. Diese beiden Kontakte sind auf der gleichen Seite der Symmetrieebene 19
angeordnet und weisen je einen ersten Abstand davon auf.
Die Kontakte 4 und 6 dienen der Steuerung der Aufladung,
indem z.B. der Kontakt 4 ein Kriterium für den vom Batterietyp abhängigen höchstzulässigen Ladestrom abgibt,
während am Kontakt 6 ein Kriterium erscheint, mit dessen
Hilfe das Ende der Ladung feststellbar ist. Die beiden
Kontakte 4 und 6 sind, bezogen auf die Kontakte 3 und 5,
auf der andern Seite der Symmetrieebene 13 angeordnet.
Sie weisen, ebenso wie die Kontakte 3 und 5, je einen
gleichen Abstand von der Symmetrieebene 19 auf, wobei
dieser zweite Abstand kleiner ist als der genannte erste
Abstand. Aus diesen verschiedenen Abständen ergibt sich,
dass die Verbindungsgeraden zwischen den Kontakten 3
und 6 und ausserdem 4 und 5 neben der Achse 18 verlaufen.
Für sämtliche übrigen möglichen Verbindungsgeraden zwischen je zwei dieser vier Kontakte trifft das ebenfalls
zu.

Wie aus der Figur 4 hervorgeht, ist im Ladegerät die Zahl
der zweiten Kontakte doppelt so gross wie die Zahl der
an der Batterie vorhandenen ersten Kontakte, indem jedem
ersten Kontakt der Batterie zwei zweite Kontakte im Ladegerät zugeordnet sind, und zwar je einer davon an einer
der beiden Innenflächen 8 und 9. Diese zwei Kontakte sind
untereinander galvanisch verbunden. Die Lage der vier
zweiten Kontakte 10, 12, 14 und 16 entspricht dabei der
in den Figuren dargestellten Lage der ersten Kontakte
3, 4, 5 und 6, während jeder zweite Kontakt, welcher mit
einem der vier erwähnten zweiten Kontakte galvanisch verbunden ist, jeweils auf der dem betreffenden Kontakt gegenüberliegenden Innenfläche derart angeordnet ist, dass

- 5 -

eine die betreffenden beiden Kontakte verbindende Gerade durch die Symmetrieachse 18 läuft. Somit sind an jeder der Innenflächen 8 und 9 vier zweite Kontakte vorhanden, welche allen vier auf die beiden Flächen 1 und 2 verteilten ersten Kontakten entsprechen. Von diesen acht zweiten Kontakten führen nun die Kontakte 10 und 17 die positive Polarität und die Kontakte 14 und 13 die negative Polarität der Lade-Spannungsquelle, während die Kontakte 12 und 15 das Kriterium betreffend Batterietyp und die Kontakte 16 und 11 das Kriterium betreffend Ladezustand weiterleiten.

Anhand der verschiedenen Figuren ist nun leicht ersichtlich, dass beim Einschieben der Batterie in das Ladegerät jeder der ersten Kontakte von einem passenden zweiten Kontakt berührt wird, und zwar auch dann, wenn die Batterie in einer Weise eingesetzt ist, bei welcher sie gegenüber der Darstellung in den Figuren um eine halbe Drehung bezüglich ihrer Symmetrieachse gedreht ist.

Sofern die Batterie in der in den Figuren dargestellten Lage in das Ladegerät eingeführt ist, werden die Kontaktverbindungen 3-10, 4-12, 5-14 und 6-16 hergestellt, während bei um eine halbe Drehung gedrehter Batterie die Verbindungen 3-17, 4-15, 5-13 und 6-11 zustande kommen. In beiden Fällen ist damit die Batterie richtig mit dem Ladegerät verbunden.

Die Erfindung ist keinesfalls an die dargestellte Anordnung der Kontakte gebunden. Es wäre auch möglich, die ersten Kontakte zum Teil oder ausschliesslich an den beiden Längsflächen oder sämtliche ersten Kontakte an der gleichen Fläche anzuordnen, sofern die Bedingung erfüllt wäre, dass keine der möglichen Verbindungsgeraden zwischen zwei ersten Kontakten durch die Achse 18 verläuft. Eine weitere Möglichkeit bestände darin, einen der ersten Kontakte in der Symmetrieebene 19 anzuordnen.

Die vorstehend angeführte Möglichkeit, alle ersten Kontakte auf der gleichen Fläche anzuordnen besitzt allerdings den Nachteil, dass die der Aufladung dienenden und somit mit den Polen der Batterie verbundenen Kontakte durch einen beliebigen metallischen Gegenstand, mit dem die betreffende Fläche in Berührung kommt, kurzgeschlossen werden können, wodurch die Batterie entladen wird, sofern dies nicht durch einen in der Batterie eingebauten Gleichrichter verhindert ist.

0018323

- 1 -

Patentansprüche:

1. Aufladbare Batterie in einem vier Längs-Aussenflächen aufweisenden quaderförmigen Gehäuse mit einer Längs-Symmetrieachse (18) und Ladegerät mit einem köcherförmigen Teil (7), welcher vier in ihrer Anordnung derjenigen der Längs-Aussenflächen der Batterie entsprechende Längs-Innenflächen mit einer Längs-Symmetrieachse (18) aufweist und in welchen die Batterie zwecks Aufladung in einer Weise einführbar ist, in welcher die beiden Symmetrieachsen (18) zusammenfallen und wobei am Gehäuse der Batterie angebrachte erste Kontakte (3...6) mit im Innern des genannten köcherförmigen Teils (7) angebrachten zweiten Kontakten (10...17) in Verbindung gebracht werden, dadurch gekennzeichnet, dass die ersten Kontakte (3...6) an mindestens einer bestimmten Längsfläche (8,9) der Batterie angeordnete starre Vorsprünge sind, dass die zweiten Kontakte (10...17) an Längs-Innenflächen (8,9) des Ladegerätes angebrachte, in einer senkrecht zu diesen Flächen verlaufenden Richtung bewegliche Federn sind, dass die ersten Kontakte (3...6) in einer Weise angeordnet sind, gemäss welcher eine durch zwei beliebige erste Kontakte verlaufende Gerade neben der Längs-Symmetrieachse (18) vorbei verläuft und dass jedem ersten Kontakt (3,4,5,6) zwei zum Zusammenwirken mit diesem Kontakt bestimmte, untereinander verbundene zweite Kontakte (10,17; 11,16; 12,15; 13,14) zugeordnet sind, welche in einer Weise an einander gegenüberliegenden Innenflächen des Ladegerätes angeordnet sind, gemäss welcher

- 2 -

eine durch die beiden Kontakte verlaufende Gerade durch die Symmetrieachse (18) verläuft, wodurch bei in das Ladegerät eingesetzter Batterie jeder erste Kontakt, unabhängig von der Lage der Batterie innerhalb des Ladegerätes, immer einen von zwei untereinander verbundenen zweiten Kontakten berührt.

2. Aufladbare Batterie und Ladegerät nach dem Patentanspruch 1, dadurch gekennzeichnet, dass die der Aufladung der Batterie dienenden ersten Kontakte (3,5) an zwei einander gegenüberliegenden Längs-Aussenflächen (1,2) angebracht sind.

3. Aufladbare Batterie und Ladegerät nach dem Patentanspruch 2, welche Batterie ausser den beiden der Aufladung dienenden ersten Kontakten (3,5) noch mindestens einen weiteren, der Steuerung der Aufladung dienenden ersten Kontakt (4,6) und eine zu den die ersten Kontakte tragenden Aussenflächen (1,2) senkrecht stehende Symmetrieebene (19) aufweist, dadurch gekennzeichnet, dass die der Aufladung dienenden ersten Kontakte (3,5) auf der gleichen Seite der Symmetrieebene (19) und je in einem gleichen ersten Abstand davon und der der Steuerung der Aufladung dienende erste Kontakt (4,6) auf der andern Seite der Symmetrieebene (19) in einem zweiten, vom ersten Abstand verschiedenen Abstand davon angeordnet ist.

Fig. 1

Fig. 2

Fig. 3

Fig. 4